# EUROPEAN PATENT APPLICATION

(11) **EP 4 389 326 A1**
(43) Date of publication of application: **26.06.2024**
(21) Application number: 22216089.7
(22) Date of filing: 22.12.2022
(51) Int. Cl.: B23B 27/00, B23B 27/14

(54) **TURNING TOOL AND A CUTTING INSERT THEREFOR**

(71) Applicant: AB Sandvik Coromant, 811 81 Sandviken (SE)
(72) Inventor: WICKSTRÖM, David, 811 81 Sandviken (SE); LÖF, Ronnie, 811 81 Sandviken (SE); WIKBLAD, Krister, 811 81 Sandviken (SE)
(74) Representative: Sandvik

(57) **Abstract**

The invention relates to a cutting insert (1) for a turning tool, the cutting insert comprising a first side (2) including a first rake face (11), and a second side (3) including a second rake face (12), wherein the first and second sides are arranged opposite each other and facing opposite directions. The cutting insert comprise a peripheral surface (4) connecting the first side (2) and the second side (3), wherein the peripheral surface (4) includes a first relief surface (7) and a second relief surface (8). A first cutting edge (5) is arranged at the intersection between the first relief surface (7) and the first rake face (11), and a second cutting edge (6) is arranged at the intersection between the second relief surface (8) and the second rake face (12), wherein the first cutting edge (5) comprises a first nose cutting edge (51) and the second cutting edge (6) comprises a second nose cutting edge (61). When the cutting insert (1) is seen in a plan view of the first or the second side (2, 3), a first line (r1) that extends from the geometric center (GC) of the cutting insert (1) to the center (C1) of the first nose cutting edge (51) forms an insert angle (α) to a second line (r2) extending from the geometric center (GC) of the cutting insert (1) to the center (C2) of the second nose cutting edge (61). The cutting insert (1) has only two cutting edges (5, 6), each cutting edge including a nose cutting edge (51, 61), and the insert angle (α) is between 90° and 175°. The invention also relates to a turning tool (10) comprising such cutting insert.

## Description

### TECHNICAL FIELD

The invention relates to metal cutting, and in particular to turning operations wherein a turning tool is used for machining a rotating workpiece.

### BACKGROUND ART

Within the field of metal cutting, a turning tool may be used for machining the surface of a rotating workpiece, for example the inner surface of a hole in the workpiece. In such machining operations, the tool may extend along a central axis that is parallel to the rotational axis of the workpiece.

A cutting insert, for example made of cemented carbide or some other wear resistant material, is commonly arranged at the front of a turning tool. Cutting inserts often include multiple cutting edges, such that the cutting insert is indexable, i.e. such that different cutting edges can be positioned in active or inactive positions depending on how the cutting insert is mounted in the insert seat. Such indexable cutting insert is symmetrical in a top view, meaning that the cutting insert can be indexed by a pre-defined angle (for example 180° for a cutting insert that is two times indexable) and still fit in the insert seat. As an example, one type of indexable cutting insert that is sometimes used for turning is a rhombus-shaped, double-sided cutting insert, i.e. with four cutting edges. With an indexable cutting insert, the tool life, and thus the cost efficiency, can be increased.

When machining inside a hole of a rotating workpiece, it may be desired sometimes to use a large radial cutting depth. In those cases, the cutting insert must have a significant extension in a radial direction out from the turning tool body. However, if using an indexable cutting insert, it may be difficult to achieve a large radial extension out from the tool body, especially for small turning tools, due to space limitations.

Hence, there is a need for improved tools for internal turning wherein a large radial cutting depth is needed.

### SUMMARY

It is an object of the present invention to mitigate the shortcomings of the prior art and to provide a turning tool and an indexable cutting insert suitable for internal turning applications that require a large radial cutting depth.

Thus, according to a first aspect, the invention relates to cutting insert for a turning tool, the cutting insert comprising a first side including a first rake face, a second side including a second rake face, wherein the first and second sides are arranged opposite each other and facing opposite directions, and a peripheral surface connecting the first side and the second side, wherein the peripheral surface includes a first relief surface and a second relief surface. A first cutting edge is arranged at the intersection between the first relief surface and the first rake face, and a second cutting edge is arranged at the intersection between the second relief surface and the second rake face. The first cutting edge comprises a first nose cutting edge and the second cutting edge comprises a second nose cutting edge. When the cutting insert is seen in a plan view of the first or the second side, a first line extending from the geometric center of the cutting insert to the center of the first nose cutting edge forms an insert angle α to a second line extending from the geometric center of the cutting insert to the center of the second nose cutting edge. The cutting insert has only two cutting edges, each including a nose cutting edge, and the insert angle α is between 90° and 175°.

The inventors have found that such indexable cutting insert, that is asymmetric in a plan view, can be mounted in a turning tool body such that it has a minimal radial extension into the tool body while having a significant radial extension out from the tool body, thus providing for a large radial cutting depth. Within the tool body, such cutting insert will extend primarily in an axial direction of the tool body. Indexing by 180° while also reversing the cutting insert will reposition the first and the second cutting edges in respective active and inactive positions.

A "turning tool" should be understood as a cutting tool used for machining a rotating workpiece. Such tool, in the context of machining the internal surface of a hole in a rotating workpiece, is sometimes also referred to as a boring bar. The central axis of such turning tool is parallel, but usually not coaxial, with the rotation axis of the workpiece, and the turning tool can be moved radially within the hole to engage the surface of the workpiece. Thereby, a varying internal profile of the hole can be machined by changing the radial displacement between the turning tool and the rotation axis of the workpiece.

The term "cutting edge" as used herein, if not specified otherwise, should be understood as the combination of cutting edge segments that together form a complete cutting edge, potentially comprising multiple cutting edge segments such as a nose cutting edge, a primary cutting edge and a secondary cutting edge. According to the present disclosure, a cutting insert having exactly two cutting edges will be indexable two times, and each cutting edge may include not only a nose cutting edge, but also a primary cutting edge and a secondary cutting edge. As an example, the primary cutting edge may extend from one end of the nose cutting edge and a secondary cutting edge may extend from the other end of the nose cutting edge. Thus, as an example, a cutting insert according to the invention may comprise a first cutting edge including a first primary cutting edge, a first secondary cutting edge and a first nose cutting edge, and a second cutting edge including a second primary cutting edge, a second secondary cutting edge and a second nose cutting edge.

Each of such first and second primary and secondary cutting edges may be straight in a plan view of the first or second sides. Each of the first and second nose cutting edges may be convexly curved in a plan view, i.e. preferably arc-shaped. Thus, in such view, each nose cutting edge may be formed by a single radius, e.g. connecting the primary cutting edge to a secondary cutting edge. Alternatively, each nose cutting edge may include multiple curved segments of different radii, and possibly also straight, or substantially straight, segments, for example such as to form a so-called wiper cutting edge. The center of the nose cutting edge is the point that is, along the nose cutting edge, halfway between the respective end points of the nose cutting edge, e.g. the point from which a distance along the nose cutting edge to the primary cutting edge is the same as the distance along the nose cutting edge to the secondary cutting edge.

The first and second sides may generally extend in respective first and second planes that are parallel to each other. The first and the second sides may be flat surfaces, but may also include various geometrical formations including recesses or protrusions, changing the cutting geometry and improving the chip breaking, for example. The first and the second rake faces, formed on the first and second sides, respectively, face opposite or substantially opposite directions. The first and second sides may include one or more portions acting as contact surfaces arranged to abut corresponding support surfaces in an insert seat of a turning tool.

A central axis of the cutting insert extends from the first side to the second side, through the geometric center of the cutting insert, and perpendicular to the first and second planes in which the respective first and second sides generally extend. The cutting insert may comprise a through-hole that opens in the first and second sides and that can be used for fastening the cutting insert within an insert seat of a tool body using a fastening element, such as a screw. The through hole may extend along the central axis of the cutting insert and may be circular in cross sections perpendicular to a central axis.

The relief surfaces may be parallel to the central axis of the cutting insert, i.e. the cutting insert may have a negative basic shape. Alternatively, the cutting insert may have a positive basic shape, meaning that the relief surfaces extend at a non-zero relief angle with respect to the central axis of the cutting insert.

The cutting insert according to the invention is primarily intended and adapted for longitudinal turning , i.e. wherein the feed direction is parallel to the rotational axis of the work piece. In longitudinal turning, a primary cutting edge may be arranged to function as a leading cutting edge whereas the nose cutting edge is arranged to generate a surface which is cylindrical or concentric with the rotational axis of the metal work piece.

For some embodiments, the respective nose cutting edges are formed such that tangential lines at the respective centers of the first and second nose cutting edges will cross each other, when the insert is seen in a plan view of the first or second sides, at an angle less than 90°, but greater than 5°, for example at an angle withing the range 5-85°.

According to some embodiments the insert angle α between the first line and the second line is between 110° and 160°. The insert angle α may for example be between 120° and 140°, such as, for example, 130°, or approximately 130°.

According to some embodiments, a first primary cutting edge extends from the first nose cutting edge in a direction approaching the second nose cutting edge, and a second primary cutting edge extends from the second nose cutting edge in a direction approaching the first nose cutting edge.

According to some embodiments, the distance from the first primary cutting edge to the second side is decreasing away from the first nose cutting edge, and the distance from the second primary cutting edge to the first side is decreasing away from the second nose cutting edge. Hence, according to such embodiments, in a side view of the cutting insert, the primary cutting edges do not extend in parallel with the first and second sides, but are sloping away from the respective nose cutting edges.

According to some embodiments, the first relief surface comprises a first primary relief surface adjacent the first primary cutting edge, and the second relief surface comprises a second primary relief surface adjacent the second primary cutting edge, wherein the first primary relief surface and the second primary relief surface adjoin each other.

The first primary relief surface and the second primary relief surface may be located on a common flat sub-surface of the peripheral surface. Such design may have various benefits. For example, the potential effective lengths of the respective primary cutting edges may be increased.

A first bisector extending from the first nose cutting edge mid-way between the first primary cutting edge and the first secondary cutting edge does not extend in parallel to a second bisector extending from the second nose cutting edge mid-way between the second primary cutting edge and the second secondary cutting edge, when seen in a plan view of the first or second sides. Instead, such first and second bisectors form a bisector angle δ, when seen in a plan view of the first or the second side, that is smaller than 180°. The bisector angle δ may, but does not necessarily, correspond to the insert angle α. For example, the bisector angle δ may be between 90° and 175°, such as between 110° and 150°. Accordingly, the bisector angle δ may be between 120° and 130°, such as, for example, 125°.

The cutting insert has a maximum thickness measured from the first side to the second side in a direction parallel to the central axis of the cutting insert. According to some embodiments, each of the first and the second relief surfaces adjacent the first nose cutting edge and the second nose cutting edge, respectively, has a length of extension in a direction parallel to the central axis that is less than 75% of the maximum thickness of the cutting insert. Thereby, an increased clearance to the machined surface in internal turning operations may be obtained without compromising the strength of the cutting insert.

According to another aspect, the invention relates to a turning tool comprising a tool body including a first insert seat in which a cutting insert according to any of the embodiments disclosed herein is mounted.

The turning tool may be arranged to machine a metal workpiece, and may include a front end where the cutting insert is mounted, and a rear end which is adapted to be clamped directly or indirectly to a machine interface of a machine tool, such as a Computerized Numerical Control (CNC) lathe.

Thus, according to some embodiments, the tool body comprises a front end, a rear end and a tool body central axis extending from the front end to the rear end, and the first insert seat and the cutting insert are arranged such that the first line extending from the geometric center of the cutting insert to the center of the first nose cutting edge extends forward from the geometric center of the cutting insert in a direction that is inclined with respect to the tool body central axis by a first inclination angle β1, and the second line extending from the geometric center of the cutting insert to the center of the second nose cutting edge extends rearward from the geometric center of the cutting insert in a direction that is inclined with respect to the tool body central axis by a second inclination angle β2. The second inclination angle β2 is less than 30° and the first inclination angle β1 is at least 5° greater than the second inclination angle β2.

As used herein, a "rearward" direction and a "forward" direction refers to directions that have at least a component in the rearward and forward directions, respectively, along the tool body central axis. Hence, when the cutting insert is mounted in the first insert seat, the center of the first nose cutting edge is forward of the geometric center of the cutting insert, while the center of the second nose cutting edge is rearward of the geometric center of the cutting insert. When turning the cutting insert upside down within the insert seat and indexing it by 180°, i.e. such that the second cutting edge is placed in an active position, the relationship is obviously reversed, such that the center of the second nose cutting edge is forward of the geometric center of the cutting insert, while the center of the first nose cutting edge is rearward of the geometric center of the cutting insert.

With this arrangement, the cutting insert mounted in the tool body will have a general extension primarily in two directions - an axial direction along the tool body central axis and a radial direction outwards from the tool body. Accordingly, even with a large radial extension out from the tool body, the cutting insert will not require much space inside the tool body, at least not in a direction perpendicular to the tool body central axis.

Such configuration can also be expressed in terms of the radial distance between the geometric center of the cutting insert and the respective first and second nose cutting edges when the cutting insert is mounted in the tool body.

Thus, according to some embodiments, a radial distance (with respect to the tool body central axis) from the geometric center of the cutting insert to the center of the first nose cutting edge is at least two times the radial distance from the geometric center of the cutting insert to the center of the second nose cutting edge. Such radial distances are measured in a direction perpendicular to the tool body central axis from a line that is parallel with the tool body central axis and passes through the geometric center of the cutting insert.

Moreover, the cutting insert, when mounted in the insert seat, has a maximum inwards radial extension and a maximum outwards radial extension. In other words, the cutting insert, when mounted in the insert seat, has a maximum outwards radial extension measured in a direction perpendicular to the tool body central axis, from a line that is parallel with the tool body central axis and that passes through the geometric center of the cutting insert, to a radially most distal point of the cutting insert, and a maximum inwards radial extension measured in a direction perpendicular to the tool body central axis, from a line that is parallel with the tool body central axis and that passes through the geometric center of the cutting insert, to a radially most proximal point of the cutting insert.

Such maximum outwards radial extension is preferably larger than the maximum inwards radial extension. According to some embodiments, the maximum outwards radial extension may be at least 50% greater than the maximum inwards radial extension.

The seat for accommodating the cutting insert may be located at the front end of the tool body, or more precisely arranged in the tool body at an interface between the front end and a tool body peripheral surface.

According to some embodiments, the turning tool body includes a second seat in which a second cutting insert is mounted, and wherein the first and the second insert seats are located on opposite sides, or substantially opposite sides, relative to the tool body central axis.

The first and the second cutting inserts cannot be engaged simultaneously in a cutting process. Nevertheless, such turning tool having two cutting inserts may result in increased productivity since the inserts can be used sequentially in a cutting process, potentially reducing the number of tool changes required to machine a certain component. As an example, the first cutting insert may be used when machining in the forward direction, into a hole in a rotating workpiece, whereas the second cutting insert may be used when machining in a rearward direction, out of the hole.

For such turning tools with two cutting inserts, the available space within the tool body in a direction perpendicular to the tool body central axis is quite limited, especially for small turning tools, and a design according to the present disclosure is therefore particularly advantageous.

### BRIEF DESCRIPTION OF DRAWINGS

The solution will now be described in more detail by means of exemplary embodiments and with reference to the accompanying drawings, in which:
Fig. 1 is a perspective view of a cutting insert according to an embodiment of the invention.
Fig. 2 is a top view of the cutting insert.
Figs. 3-5 are side views of the cutting insert as seen from directions as indicated in Fig. 2.
Fig. 6 illustrates a turning tool according to an embodiment of the invention, including a cutting insert according to Figs. 1-5.
Fig. 7 is a closeup view of the front part of the turning tool in Fig. 6.
Fig. 8 illustrates the front part of the turning tool body shown in Figs. 6-7, with the cutting insert removed.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### DETAILED DESCRIPTION OF EMBODIMENTS

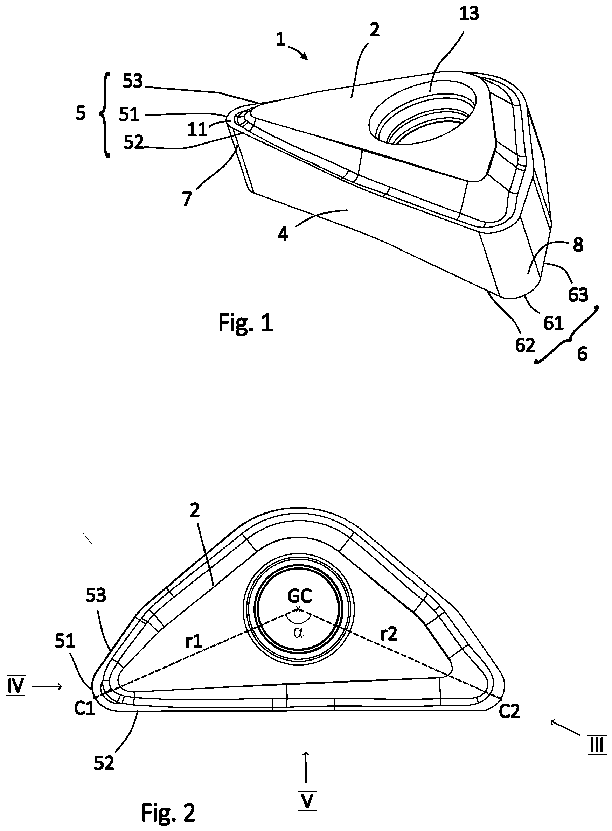

With reference to Figs. 1-5, a cutting insert 1 according to an embodiment of the invention will now be described.

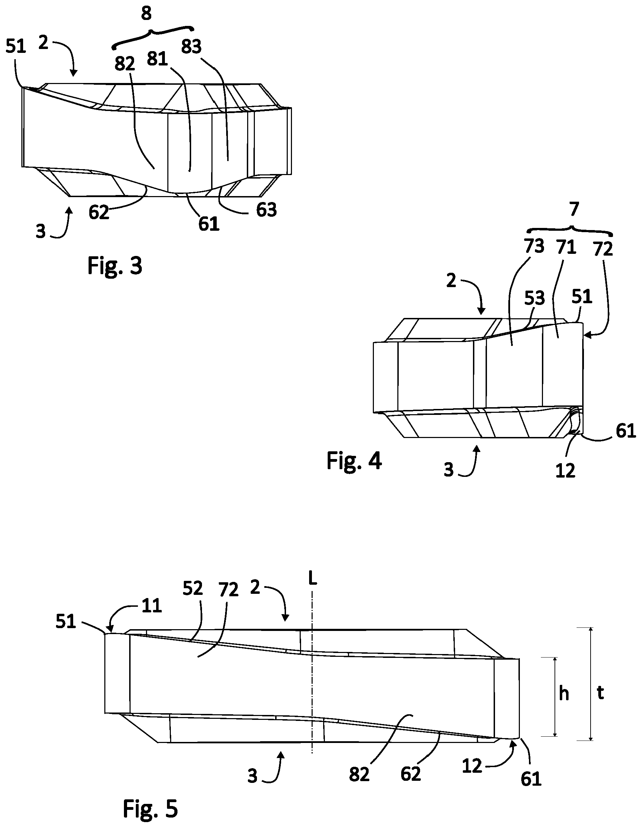

The cutting insert 1 has a first side 2, a second side 3 and a peripheral surface 4 connecting the first and second sides 2, 3. The first and second sides 2, 3 face opposite directions and generally extend in respective planes that are parallel to each other. A central axis L (illustrated in fig. 5) extends from the first side 2 to the second side 3 and is perpendicular to the parallel planes in which the first and second sides 2, 3 generally extend. The central axis L passes through a geometric center GC of the cutting insert. A through-hole 13 extends along the central axis L.

The peripheral surface 4 comprises a first relief surface 7 and a second relief surface 8. The first side 2 comprises a first rake face 11, and the second side 3 comprises a second rake face 12. At the interface between the first relief surface 7 and the first rake face 11, a first cutting edge 5 is formed. At the interface between the second relief surface 8 and the second rake face 12, a second cutting edge 6 is formed.

The first cutting edge 5 includes a first nose cutting edge 51, a first primary cutting edge 52 and a first secondary cutting edge 53. Accordingly, the first relief surface 7 also includes a first nose relief surface 71, a first primary relief surface 72 and a first secondary relief surface 73 (illustrated in Fig. 4).

In a corresponding way, the second cutting edge 6 includes a second nose cutting edge 61, a second primary cutting edge 62 and a second secondary cutting edge 63, whereas the second relief surface 8 includes a second nose relief surface 81, a second primary relief surface 82 and a second secondary relief surface 83 (illustrated in Fig. 3).

The relief surfaces 7 and 8 are parallel with the central axis L.

Fig. 2 is a top view of the cutting insert 1, i.e. a plan view of the first side 2. As shown in Fig. 2, when seen in such plan view, a first line r1 extending from the geometric center GC of the cutting insert to the center C1 of the first nose cutting edge 51 forms an insert angle α to a second line r2 extending from the geometric center GC of the cutting insert to the center C2 of the second nose cutting edge 61. The angle α is smaller than 180°, and preferably between 90° and 175°. In the illustrated embodiment, the angle α is approximately 130°. The cutting insert 1 is thus asymmetric with respect to the central axis L.

Each of the first and second nose cutting edges 51 and 61 is convexly curved in a plan view, as best seen in Fig. 2, whereas the first and the second primary and secondary cutting edges 52, 53, 62, 63 are straight in such view. Hence, the first and the second primary and secondary relief surfaces 72, 73, 82, 83 are flat surfaces, whereas the nose relief surfaces 71, 81 are convex surfaces, each formed by a single radius, connecting the respective primary and secondary relief surfaces. In a side view, the first and the second primary and secondary cutting edges 52, 53, 62, 63 are sloping away from the first and the second nose cutting edges 51, 61, respectively.

Accordingly, as seen in Figs. 3-5, the distance from the first primary cutting edge 52 to the second side 3 is decreasing away from the first nose cutting edge 51, and the distance from the second primary cutting edge 62 to the first side 2 is decreasing away from the second nose cutting edge 61. Correspondingly, the distance from the first secondary cutting edge 53 to the second side 3 is decreasing away from the first nose cutting edge 51, and the distance from the second secondary cutting edge 63 to the first side 2 is decreasing away from the second nose cutting edge 61.

The first primary relief surface 72 and the second primary relief surface 82 adjoin each other and are located on the same flat sub-surface of the peripheral surface 4, which is best seen in Fig. 5.

In the illustrated embodiment, the length of extension h of each of the first and the second relief surfaces 7, 8 adjacent the respective first and second nose cutting edges 51, 61, in directions parallel to the central axis L, i.e. the extension of each of the first and the second nose relief surfaces 71 and 81, is much smaller than the total thickness t of the cutting insert. In this embodiment, the length of extension h is approximately 70% of the total thickness t.

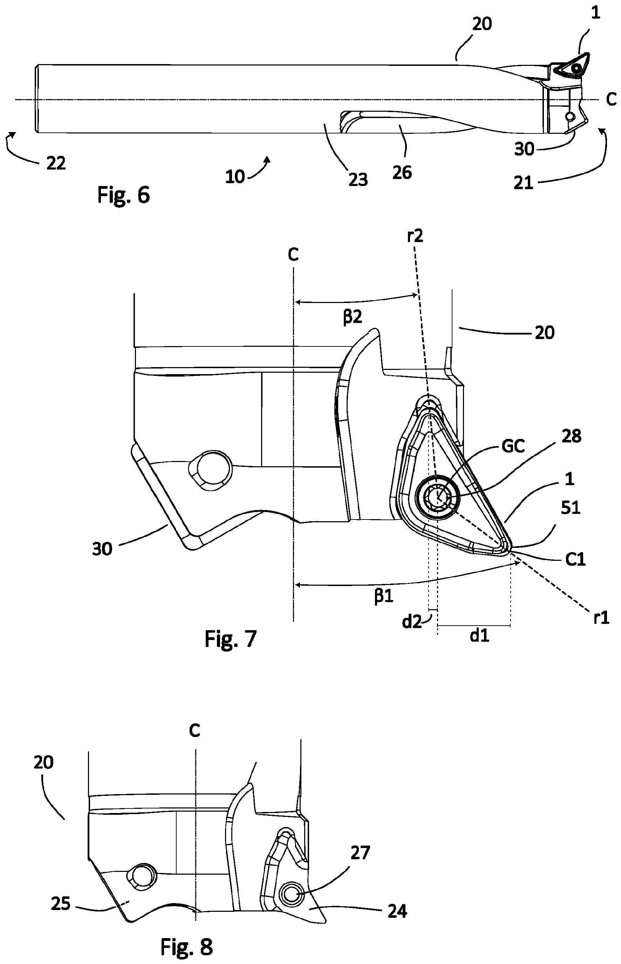

Figs. 6-8 illustrate a turning tool 10 including a tool body 20 according to an embodiment of the invention. The tool body 20 has a front end 21, a rear end 22 and a tool body central axis C extending longitudinally through the tool body from the front end 21 to the rear end 22. A tool body peripheral surface 23 connects the front end 21 and the rear end 22. Flutes 26 for evacuating chips are formed in the tool body peripheral surface 23. As best seen in Fig. 8, the tool body 20 further comprises a first insert seat 24 and a second insert seat 25 formed in the interface between the front end 21 and the tool body peripheral surface 23. The first and second insert seats 24, 25 are located on opposite sides relative to the tool body central axis C. A threaded hole 27 is located in each of the insert seats 24, 25. A cutting insert 1 according to Figs. 1-5 is mounted in the first insert seat 24, using a screw 28 extending through the through-hole 13 in the cutting insert 1 and into the threaded hole 27 in the first insert seat 24. A second cutting insert 30 is likewise mounted in the second insert seat 25. The second cutting insert 30 is of a different kind and is used in different machining operations. For example, in the present embodiment, the turning tool 10 may be controlled such that the second cutting insert 30 first engages the surface of a rotating workpiece (not shown) when machining in a forward direction, for example into a hole in the workpiece, whereas the turning tool 10 thereafter may be controlled such that the first cutting insert 1 engages the workpiece when machining in a rearward direction, e.g. out of the hole.

As best seen in Fig. 7, the first insert seat 24 is formed such that, when the cutting insert 1 is mounted in the insert seat 24 with the first cutting edge 5 located at an active (operative) position, the first line r1 extends forward from the geometric center GC of the cutting insert 1 in a direction that is inclined with respect to the tool body central axis C by a first inclination angle β1, and the second line r2 extends rearward from the geometric center GC of the cutting insert 1 in a direction that is inclined with respect to the tool body central axis C by a second inclination angle β2. The second inclination angle β2 is less than 30° and the first inclination angle β1 is at least 5° greater than the second inclination angle β2. In the embodiment illustrated in Figs. 6-8, the second inclination angle β2 is approximately 5°, whereas the first inclination angle β1 is approximately 55°.

With this configuration, the cutting insert 1 will have a primary extension in the axial direction of the tool body as well as radially outwards from the tool body, but the cutting insert's extension into the tool body 20 in a direction perpendicular to the central axis C will be rather small.

Another way to express such configuration is by comparing a radial distance d1 from the center C1 of the first nose cutting edge 51 to the geometric center GC of the cutting insert with a radial distance d2 from the center C2 of the second nose cutting edge 61 to the geometric center GC of the cutting insert. The distance d1 should be at least two times the distance d2. In the illustrated embodiment, the distance d1 is approximately eight times the distance d2.

Moreover, the cutting insert 1, when mounted in the insert seat 24, has a maximum inwards radial extension to a radially most proximal point of the cutting insert and a maximum outwards radial extension to a radially most distal point of the cutting insert, wherein such extensions are measured along a direction perpendicular to the tool body central axis C from a line that is parallel with the tool body central axis C and passes through the geometric center GC of the cutting insert. It should be noted that such radially most distal and proximal points of the cutting insert 1 are not the centers C1, C2 of the first and the second nose cutting edges, respectively, as seen in Fig. 7.

According to the present invention, the maximum outwards radial extension is preferably larger than the maximum inwards radial extension. In the illustrated embodiment, the maximum outwards radial extension is approximately 80% greater than the maximum inwards radial extension.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited.

## Claims

1. A cutting insert (1) for a turning tool, the cutting insert comprising:
- a first side (2) including a first rake face (11), and a second side (3) including a second rake face (12), wherein the first and second sides are arranged opposite each other and facing opposite directions;
- a peripheral surface (4) connecting the first side (2) and the second side (3), wherein the peripheral surface (4) includes a first relief surface (7) and a second relief surface (8);
- a first cutting edge (5) arranged at the intersection between the first relief surface (7) and the first rake face (11); and
- a second cutting edge (6) arranged at the intersection between the second relief surface (8) and the second rake face (12);
wherein the first cutting edge (5) comprises a first nose cutting edge (51) and the second cutting edge (6) comprises a second nose cutting edge (61), and wherein, when the cutting insert (1) is seen in a plan view of the first or the second side (2, 3), a first line (r1) extending from the geometric center (GC) of the cutting insert (1) to the center (C1) of the first nose cutting edge (51) forms an insert angle (α) to a second line (r2) extending from the geometric center (GC) of the cutting insert (1) to the center (C2) of the second nose cutting edge (61), **characterized in that** the cutting insert (1) has only two cutting edges (5, 6), each cutting edge including a nose cutting edge (51, 61), and the insert angle (α) is between 90° and 175°.

2. A cutting insert according to claim 1, wherein the insert angle (α) is between 110° and 160°.

3. A cutting insert according to any of the previous claims, wherein the first cutting edge (5) comprises a first primary cutting edge (52) and the second cutting edge (6) comprises a second primary cutting edge (62), wherein the first primary cutting edge (52) extends from the first nose cutting edge (51) in a direction approaching the second nose cutting edge (61), and the second primary cutting edge (62) extends from the second nose cutting edge (61) in a direction approaching the first nose cutting edge (51).

4. A cutting insert according to claim 3, wherein the distance from the first primary cutting edge (52) to the second side (3) is decreasing away from the first nose cutting edge (51), and the distance from the second primary cutting edge (62) to the first side (2) is decreasing away from the second nose cutting edge (61).

5. A cutting insert according to any of the claims 3-4, wherein the first relief surface (7) comprises a first primary relief surface (72) adjacent the first primary cutting edge (52), and the second relief surface (8) comprises a second primary relief surface (82) adjacent the second primary cutting edge (62), wherein the first primary relief surface (72) and the second primary relief surface (82) adjoin each other.

6. A cutting insert according to claim 5, wherein the first primary relief surface (72) and the second primary relief surface (82) are located on a common flat sub-surface of the peripheral surface (4).

7. A turning tool (10) comprising a tool body (20) including a first insert seat (24) in which a cutting insert (1) according to any of the claims 1-6 is mounted.

8. A turning tool according to claim 7, wherein the tool body comprises
- a front end (21),
- a rear end (22), and
- a tool body central axis (C) extending from the front end (21) to the rear end (22); and
wherein the first insert seat (24) and the cutting insert (1) is arranged such that the first line (r1) extends forward from the geometric center (GC) of the cutting insert (1) in a direction that is inclined with respect to the tool body central axis (C) by a first inclination angle (β1) and the second line (r2) extends rearward from the geometric center (GC) of the cutting insert (1) in a direction that is inclined with respect to the tool body central axis (C) by a second inclination angle (β2), wherein the second inclination angle (β2) is less than 30° and the first inclination angle (β1) is at least 5° greater than the second inclination angle (β2).

9. A turning tool according to any of the claims 7-8, wherein, with respect to the tool body central axis (C), a radial distance (d1) from the geometric center (GC) of the cutting insert (1) to the center (C1) of the first nose cutting edge (51) is at least two times the radial distance (d2) from the geometric center (GC) of the cutting insert (1) to the center (C2) of the second nose cutting edge (61).

10. A turning tool according to any of the claims 7-9, wherein the turning tool body (20) includes a second insert seat (25) in which a second cutting insert (30) is mounted, and wherein the first insert seat (24) and the second insert seat (25) are located on opposite sides, or substantially opposite sides, relative to the tool body central axis (C).
